# EUROPÄISCHE PATENTANMELDUNG

(11) **EP 1 894 696 A1**
(43) Veröffentlichungstag der Anmeldung: **05.03.2008**
(21) Anmeldenummer: 07011652.0
(22) Anmeldetag: 14.06.2007
(51) Int. Cl.: B29C 45/27

(54) **Einspritzdüse zur Führung von Schmelzemasse in einer Kunststoffspritzgiessform**

(30) Priorität: 01.09.2006 DE 102006041328
(71) Anmelder: SFR Formenbau GmbH, 72770 Reutlingen (DE)
(72) Erfinder: Reinl, Horst, 72793 Pfullingen (DE)
(74) Vertreter: Ostriga, Sonnet, Wirths & Roche

(57) **Zusammenfassung**

Die Erfindung betrifft eine Einspritzdüse zur Führung von Schmelzemasse in einer Kunststoffspritzgießform od. dgl., mit einem Schmelzekanal (18, 19) und mit einem eine Düsenspitze (14) aufweisenden Düsenkern (13), sowie mit einer Heizvorrichtung (11) zum Erwärmen des Düsenkerns (13) und einer Messeinrichtung (12) mit einem dem Düsenkern (13) zugeordneten Messring (25), dessen Temperatur von der Messeinrichtung (12) gemessen wird, wobei Messring (25) und Düsenspitze (14) voneinander beabstandet angeordnet sind.

Die Besonderheit besteht darin, dass zwischen Messring (25) und Düsenkern (13) eine von Formschlussmitteln (36, 37, 38, 39) gebildete Fixiereinrichtung (F) angeordnet ist, die eine Bewegung des Messrings (25) zumindest in Richtung der Düsenspitze (14) verhindert.

## Beschreibung

Die Erfindung betrifft eine Einspritzdüse zur Führung von Schmelzemasse in einer Kunststoffspritzgießform, gemäß dem Oberbegriff des Anspruchs 1.

Aus der DE 10 2004 032 336 B3 ist eine solche Einspritzdüse bekannt. Die Einspritzdüse ist mit einer als Rohrheizkörper ausgebildeten Heizung sowie zum Regeln der Heizung mit einem Messfühler versehen, welcher die Temperatur an einem an der Einspritzdüse angebrachten Messring aufnimmt. Eine am Kern befestigte Düsenspitze hat die Aufgabe, die Schmelze zum Anspritzpunkt zu führen.

Damit bei einem Defekt der Messeinrichtung ein schnelles Auswechseln möglich ist, ist der Messring in einem vorderen Bereich des Düsenkerns auf die Außenfläche des Düsenkerns aufgeschoben. Zwischen dem Messring und der Düsenspitze ist ein Spalt ausgebildet. Der Spalt hat den Zweck, einen direkten Wärmeübergang zwischen Düsenspitze und Messring zu verhindern, weil dieser das Messergebnis verfälschen würde. Aufgrund des Formzyklus ist die Düsenspitze Temperaturschwankungen ausgesetzt.

Es hat sich in der Praxis herausgestellt, dass der Messring sich unbeabsichtigt axial nach vorne bewegen kann und auf diese Weise in Kontakt mit der Düsenspitze gerät. Es ist dann ein Wärmeübergang zwischen Düsenspitze und Messring möglich. Dieser Wärmeübergang führt zu einer Verfälschung des Messwerts, der zur Folge hat, dass die Düsentemperatur falsch gesteuert wird. Aus der Fehlsteuerung der Düse kann mangelnde Produktqualität des Spritzgießteils resultieren.

Aufgabe der Erfindung ist es daher, die Düse der Werkzeugform derart auszubilden, dass ein Austausch des Messrings bei einem Defekt leicht durchführbar und eine genauere Messwertermittlung gewährleistet ist.

Die Aufgabe wird gelöst mit den Merkmalen des Anspruchs 1, insbesondere mit den kennzeichnenden Merkmalen.

Das wesentliche Prinzip der Erfindung besteht darin, dass der Messring eine axiale Bewegungssicherung aufweist, die mittelbar oder unmittelbar eine axiale Bewegung des Messrings verhindert.

Eine mindestens mittelbar wirkende Axialsicherung im Sinne der Erfindung bedeutet, dass die Fixiereinrichtung z.B. eine unmittelbare axiale Bewegung des Messrings verhindert. Alternativ kann die Fixiereinrichtung z.B. eine Drehbewegung oder eine Bewegung verhindern, die zugleich rotatorische als auch axiale Bewegungsanteile aufweist.

Erfindungsgemäß ist die Fixiereinrichtung zwischen Messring und Düsenkern vorgesehen. Im Sinne der Erfindung bedeutet dies, dass die Fixiereinrichtung zwischen Messring und Düsenkern wirkt, also den Messring auf dem Düsenkern fixiert.

Düsenspitze im Sinne der Erfindung ist ein Düsenbestandteil, welcher mit Austrittsöffnungen zur Abgabe der Schmelze versehen ist. Die Düsenspitze ist aufgrund des zyklischen Spritzgießvorgangs Temperaturschwankungen unterworfen. Sie kann daher in Bereichen eine vom Düsenkern unterschiedliche Temperatur aufweisen.

Mittels der erfindungsgemäßen Einspritzdüse ist es möglich, den Messring in einem vorderen Bereich des Düsenkerns anzuordnen, ohne dass die Gefahr besteht, dass der Messring in Kontakt zur Düsenspitze gelangt und damit eine den Messwert verfälschende Wärmeübertragung stattfinden kann. Die Anordnung des Messrings in einem vorderen Bereich des Düsenkerns hat den Vorteil, dass bei einem Defekt der Messeinrichtung Letztere samt Messring schnell und auf einfache Weise auswechselbar ist.

Gemäß einer ersten Ausführungsform ist zwischen Messring und Düsenspitze eine unmittelbar wirkende Fixiereinrichtung vorgesehen. Eine unmittelbar wirkende Fixiereinrichtung kann bedeuten, dass eine unmittelbare Bewegung des Messrings in axialer Richtung verhindert wird und nicht z.B. eine Drehbewegung, die eine axiale Bewegung zur Folge hat, wie es der Fall wäre, wenn der Messring auf dem Düsenkern mittels eines Gewindes aufgeschraubt wäre.

Einer weiteren Ausgestaltung der Erfindung gemäß ist die Fixiereinrichtung von Formschlussmitteln gebildet. Derartige Formschlusselemente können z. B. federnde Rastelemente oder andere korrespondierende Formen an Messring und Düsenkern sein, die eine Axialbewegung des Messrings verhindern, wie z.B. ein in fluchtenden Bohrungen von Messring und Düsenkern angeordneter Stift.

Gemäß einer weiteren Ausführungsform sind die Formschlussmittel von einem am Messring oder am Düsenkern wenigstens mittelbar angeordneten Vorsprung gebildet, der in eine am Düsenkern oder am Messring angeordnete Hinterschneidung eingreift. Der Vorsprung kann beispielsweise einem am Düsenkern angeordneten Hebel oder einem federbelastetem verschwenkbaren Element zugeordnet sein, welches eine Hinterschneidung des Messrings hintergreift. Alternativ kann der Vorsprung z.B. dem Messring zugeordnet sein und eine Hinterschneidung des Düsenkerns hintergreifen.

Gemäß einer bevorzugten Ausführungsform ist der Vorsprung als Steg und die Hinterschneidung als Nut ausgebildet. Der Steg kann z.B. dem Messring und die Nut dem Düsenkern zugeordnet sein. Alternativ ist es z.B. ebenfalls möglich, dass der Steg dem Düsenkern und die Nut dem Messring zugeordnet ist. Der Steg kann in jedem Fall in Form von einem oder mehreren Stegabschnitten oder als wenigstens teilweise umlaufender Ringsteg ausgebildet sein. Die Nut kann korrespondierend in Form von einem oder mehreren Nutabschnitten oder als wenigstens teilweise umlaufende Ringnut ausgebildet sein.

Einer weiteren Ausgestaltung der Erfindung gemäß ist die Fixiereinrichtung als Rastvorrichtung ausgebildet. Beispielsweise kann der Düsenkern Rastelemente aufweisen, die, wenn der Messring in seinem Sitz auf dem Düsenkern angeordnet ist mit korrespondierenden Rastelementen des Düsenkerns, eine Axialbewegung des Messrings verhindernd, verrastet ist. Zur Verrastung können dem Messring und/oder dem Düsenkern Federelemente zugeordnet sein. Alternativ oder ergänzend kann die Verrastung mittels der federelastischen Rückstellkraft eines oder mehrerer Rastelemente vorgenommen werden. Beispielsweise kann der Messring als Ringabschnitt ausgebildet sein. Die Verrastung kann dann durch die federelastische Rückstellkraft der freien Ringenden erfolgen.

Der Messring ist gemäß einer weiteren Ausführungsform mit mindestens einem Schlitz versehen. Dies hat den Vorteil, dass der Messring leichter montierbar ist, weil er entweder z. B. aus zwei aneinander zu befestigenden Teilringen besteht oder bei einteiliger Bauform aufgespreizt werden kann. Darüber hinaus kann der Messring mit einem bezüglich der korrespondierenden Außenfläche des Düsenkerns leichtem Untermaß ausgebildet sein. Er kann dann umlaufend ohne Spiel an der Außenfläche des Düsenkerns anliegen, wodurch ein direkter Wärmeübergang zwischen Düsenkern und Messring möglich ist.

Einer weiteren Ausführungsform gemäß ist der Messring von einem hoch wärmeleitfähigen Material, insbesondere von einer Kupferberyllium-Legierung gebildet. Aufgrund des hoch wärmeleitfähigen Materials findet ein guter Wärmeübergang zwischen Düsenkern und Messring statt. Darüber hinaus verteilt sich die Wärme in kurzer Zeit gleichmäßig innerhalb des Messrings. Es kann somit eine genaue Temperaturaufnahme am Messring stattfinden.

Gemäß einer weiteren Ausgestaltung der Erfindung ist zwischen Messring und Düsenspitze ein Luftspalt ausgebildet. Der Luftspalt kann z. B. zwischen einem umlaufenden Kragen der Düsenspitze und dem Messring ausgebildet sein. Er kann z. B. 0,5 mm betragen.

Die Innenfläche des Messrings und ein mit der Innenfläche des Messrings korrespondierender Bereich der Außenfläche des Düsenkerns sind gemäß einer weiteren Ausführungsform zumindest teilweise konisch ausgebildet sind. Diese Ausgestaltung erleichtert die Montage des Messrings. Der Messring kann z.B. auf einfache Weise von der Düsenspitzenseite auf den Düsenkern aufgeschoben werden. Insbesondere wenn der Messring als Ringabschnitt ausgebildet ist und zur Verrastung aufgespreizt werden muss, ist die Montage mittels dieser Ausführungsform einfacher. Zudem ist es nicht erforderlich, den Messring kraftaufwendig auf dem Düsenkern zu verschieben, während Messring und Düsenkern sich bereits in Kontakt befinden.

Weitere Vorteile der Erfindung ergeben sich anhand der nachfolgenden Beschreibung von in den Zeichnungen dargestellten Ausführungsbeispielen. Es zeigen:
Fig. 1 einen Axialschnitt der erfindungsgemäßen Düse mit axial gesichertem Messring,
Fig. 2 eine vergrößerte Darstellung des mit II gekennzeichneten Ausschnittes in Fig. 1,
Fig. 3 einen Axialschnitt einer anderen Ausführungsform der erfindungsgemäßen Düse mit axial gesichertem Messring, und
Fig. 4 eine vergrößerte Darstellung des mit IV bezeichneten Ausschnittes in Fig. 3.

Eine nicht dargestellte Werkzeugform weist zum Einspritzen der Schmelze in den nicht dargestellten Formhohlraum eine Düse auf, die insgesamt mit der Bezugsziffer 10 bezeichnet ist. Gleiche Bezugsziffern in den unterschiedlichen Ausführungsbeispielen bezeichnen analoge Teile.

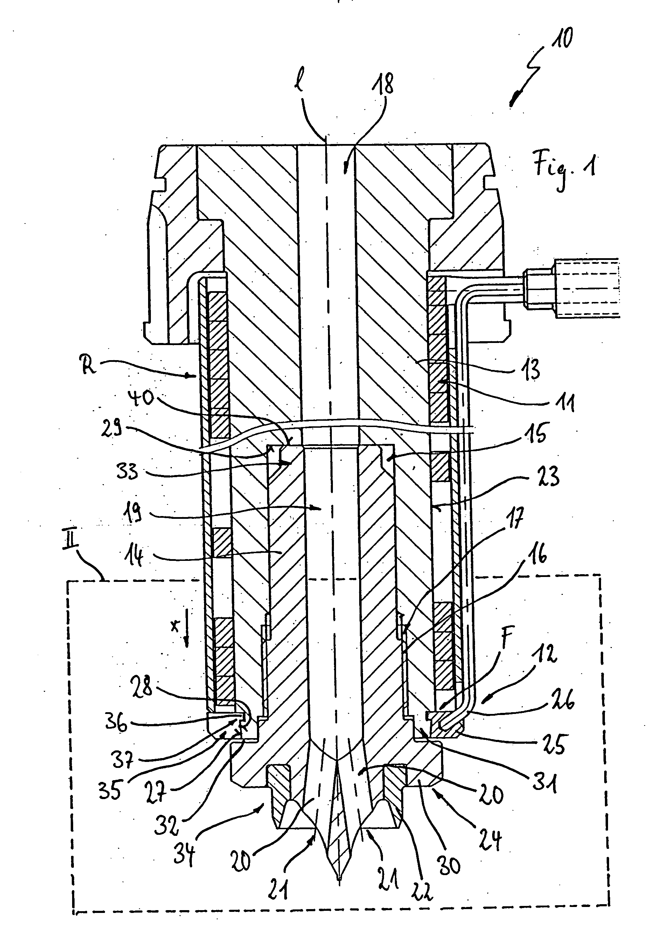

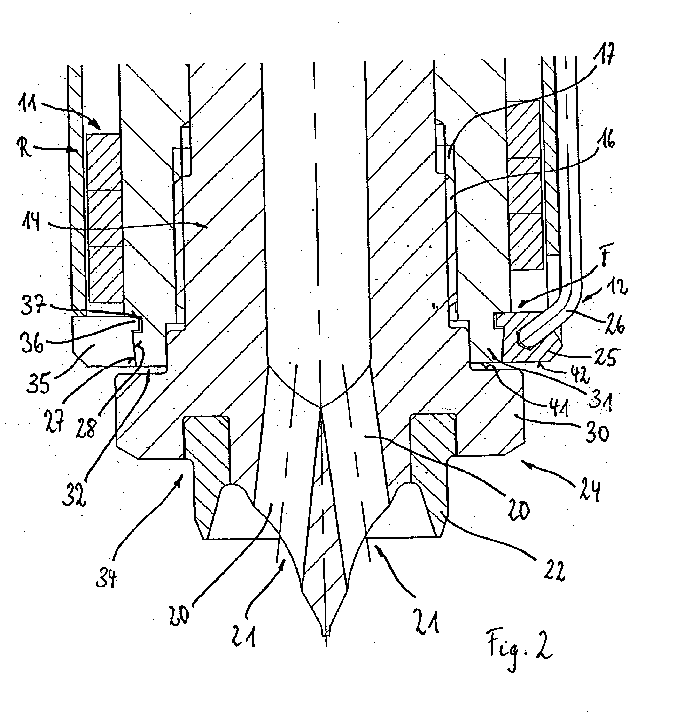

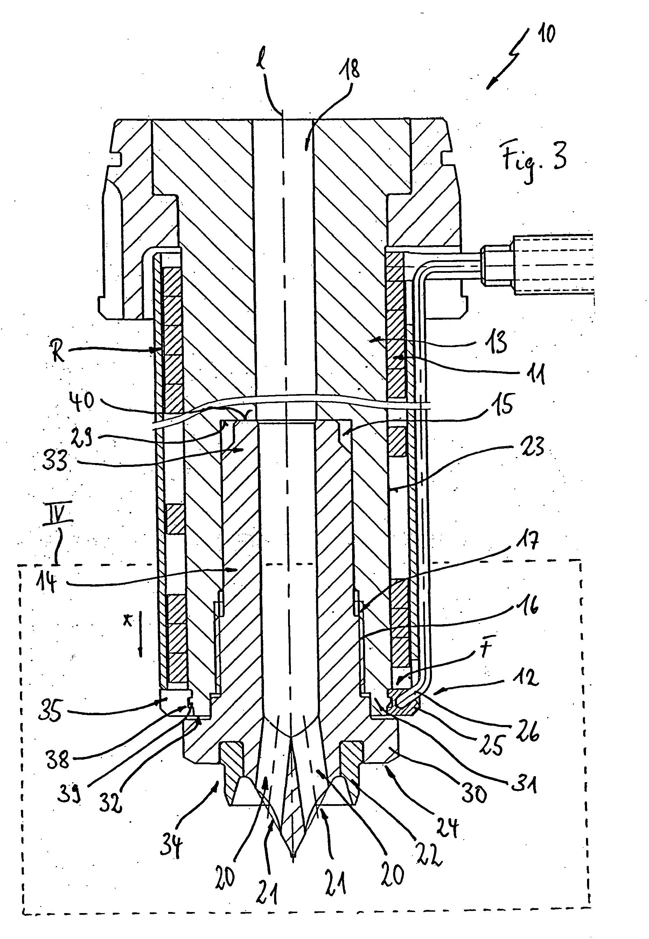

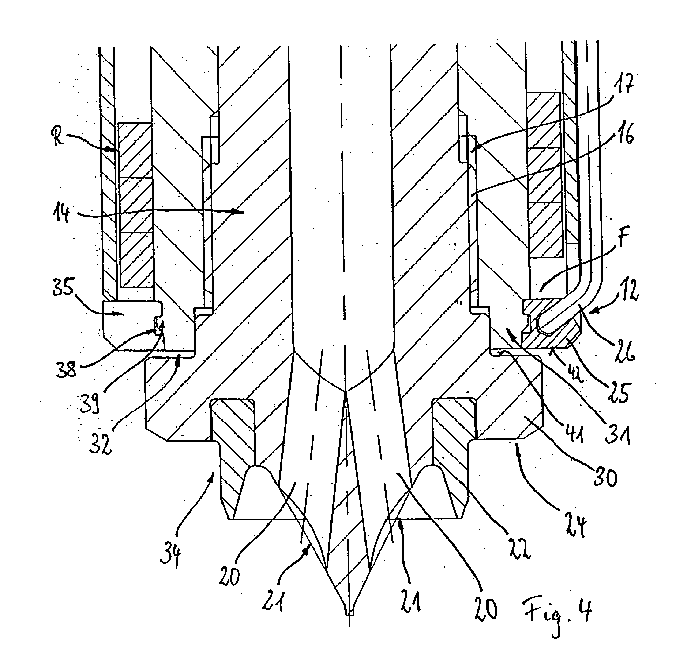

Die Düse 10 ist gemäß der Fig. 1 und 2 mit einer Heizvorrichtung 11 sowie einer Messeinrichtung 12 versehen. Die Düse 10 weist einen Düsenkern 13 sowie eine Düsenspitze 14 auf. Die Längsachse des Düsenkerns ist mit I bezeichnet. Der Düsenkern 13 sowie die Düsenspitze 14 sind z. B. aus Stahl gefertigt.

Im Düsenkern 13 ist eine Bohrung 15 vorgesehen, in welcher die Düsenspitze 14 verschraubt ist. Hierfür weist die Düsenspitze ein Außengewinde 16 auf, das mit einem Innengewinde 17 des Düsenkerns 13 korrespondiert. Der Düsenkern 13 ist von einem Schmelzekanal 18 durchsetzt, welcher in einen Schmelzekanal 19 der Düsenspitze 14 mündet. Endseitig verzweigt sich der Schmelzekanal 19 der Düsenspitze 14 in mehrere Teilkanäle 20. Über Austrittsöffnungen 21 wird die Schmelze in einen nicht dargestellten Formhohlraum oder eine formseitige Vorkammer abgegeben. Die Austrittsöffnungen 21 umgebend ist ein Dichtring 22 an einem Bereich 24 der Düsenspitze 14 angeordnet, der aus einem Material niedriger Wärmeleitfähigkeit, z.B. aus Titan, gebildet ist. Der Dichtring 22 hat die Aufgabe, die Düse 10 bezüglich der Form abzudichten.

Eine Außenmantelfläche 23 des Düsenkerns 13 ist von der Heizvorrichtung 11 umgeben, die als Rohrheizkörper R ausgebildet ist. Mittels der Heizvorrichtung 11 kann der Düsenkern 13 auf einer konstanten Temperatur gehalten werden, die erforderlich ist, um einen zuverlässigen Prozessablauf zu gewährleisten. Zur Regelung dieser Temperatur weist das Werkzeug eine Steuer- und Regelvorrichtung auf.

Die Steuer- und Regelvorrichtung umfasst eine Messeinrichtung 11 mit einem Messfühler 26. Ein Endbereich des Messfühlers 26 ist in einer Ausnehmung eines Messrings 25 angeordnet und z. B. durch Verlöten oder Verstemmen befestigt. Der Messring 25 besteht aus einem hoch wärmeleitfähigen Material, wie z.B. einer Kupferberyllium-Legierung. Die Wärme wird daher vom Düsenkern 13 aufgenommen und innerhalb des Messrings 25 in kurzer Zeit gleichmäßig verteilt. Es ist somit am Messring 25 eine Ermittlung der Temperatur des Düsenkerns 13 möglich.

Ist die Düsenspitze 14 vollständig in die Bohrung 15 eingeschraubt, so dass eine rückwärtige Fläche 40 eines Endes 33 der Düsenspitze 14 an einer Bohrungsinnenfläche 29 anschlägt, ist zwischen einer Außenfläche 41 eines Kragens 30 der Düsenspitze 14 und einer Außenfläche 42 des Messrings 25 ein Spalt 32 ausgebildet, dessen Funktion im Folgenden erläutert wird.

Aufgrund des Spritzgießzyklus unterliegt die Düsenspitze 14 Temperaturschwankungen, so dass sich die Temperatur eines Endes 34 der Düsenspitze 14 von der Temperatur des Düsenkerns 13 unterscheiden kann. Mittels des Spalts 32 wird eine direkte Wärmeübertragung, welche durch Kontakt zwischen Düsenspitze 14 und Messring 25 auftreten würde, und eine damit einhergehende Messwertverfälschung bezüglich der Temperatur des Messrings 25, verhindert.

Als Fixiereinrichtung F weist der Messring 25 einen Ringsteg 36 auf, welcher in eine Ringnut 37 des Düsenkerns 13 eingreift. Der Messring 25 ist damit axial fixiert und kann sich nicht ungewollt lösen. Mit dieser Ausgestaltung wird eine axiale Bewegung des Messrings 25 in Richtung x des Kragens 30 und somit ein Kontakt zwischen der Außenfläche 42 des Messrings 25 und der Außenfläche 41 des Kragens 30, unmittelbar verhindert.

Zur leichteren Montage des Messrings 25 sind eine Außenfläche 27 eines Endbereichs 31 des Düsenkerns 13 sowie eine Innenfläche 28 des Messrings 25 konisch ausgebildet. Der Messring 25 ist mit einem Schlitz 35 versehen und kann auf diese Weise aufgespreizt werden. Zur Montage wird der Messring 25 auf den Düsenkern 13 aufgeschoben werden, bis der Ringsteg 36 des Messrings 25 in die Ringnut 37 des Düsenkerns 13 einrastet. Aufgrund der konischen Ausbildung der Außenfläche 27 und der Innenfläche 28 spreizt sich der Messring 25 beim Aufschieben automatisch auf.

Der Innendurchmesser des Messrings 25 weist bezüglich des Außendurchmessers des Düsenkerns 13 ein Untermaß auf. Die Rückstellkraft der dem Schlitz 35 benachbarten aufgespreizten freien Enden des Messrings 25 bewirkt ein enges Anliegen der Innenfläche 28 des Messrings 25 an die Außenfläche 27 des Düsenkerns 13. Durch die enge Anlage kann ein großflächiger Wärmeübergang zwischen Messring 25 und Düsenkern 23 stattfinden. Bei einem geschlossenen Messring würde dieser Effekt nicht auftreten, da immer ein Spiel zwischen Messring 25 und Düsenkern 14 vorhanden wäre, welches die Wärmeübertragung behindern würde.

Bei einem Defekt der Messeinrichtung 12 müssen der Messring 25 sowie der Messfühler 26 von der Düse 10 demontiert werden. Hierzu ist es erforderlich, dass die Düsenspitze 14 aus der Bohrung 15 herausgeschraubt wird.

Zur Demontage des Messrings 25 ist zunächst die Düsenspitze 14 vom Düsenkern 13 durch Herausschrauben zu trennen. Danach kann der Messring 25 in axialer Richtung x vom Düsenkern 13 abgezogen werden. Der Messring 25 kann aufgespreizt und der Ringsteg 36 aus der Ringnut 37 des Düsenkerns 13 entfernt werden. Trotz der axialen Sicherung des Messrings 25 ist somit eine einfache Demontage gewährleistet.

In dem Ausführungsbeispiel gemäß Fig. 3 und Fig. 4 weist alternativ zu dem Ausführungsbeispiel gemäß Fig. 1 und Fig. 2 der Messring 25 eine Ringnut 38 auf, welche mit einem Ringsteg 39 des Düsenkerns 13 formschlüssig zusammenwirkt und dabei eine axiale Bewegung des Messrings 25 in Richtung x verhindert.

## Patentansprüche

1. Einspritzdüse zur Führung von Schmelzemasse in einer Kunststoffspritzgießform od. dgl., mit einem Schmelzekanal (18, 19) und mit einem eine Düsenspitze (14) aufweisenden Düsenkern (13), sowie mit einer Heizvorrichtung (11) zum Erwärmen des Düsenkerns (13) und einer Messeinrichtung (12) mit einem dem Düsenkern (13) zugeordneten Messring (25), dessen Temperatur von der Messeinrichtung (12) gemessen wird, wobei Messring (25) und Düsenspitze (14) voneinander beabstandet angeordnet sind, **dadurch gekennzeichnet, dass** zwischen Messring (25) und Düsenkern (13) eine von Formschlussmitteln (36, 37, 38, 39) gebildete Fixiereinrichtung (F) angeordnet ist, die eine axiale Bewegung des Messrings (25) zumindest in Richtung der Düsenspitze (14) verhindert.

2. Einspritzdüse nach Anspruch 1, **dadurch gekennzeichnet, dass** eine unmittelbar wirkende Fixiereinrichtung (F) vorgesehen ist.

3. Einspritzdüse nach Anspruch 3, **dadurch gekennzeichnet, dass** die Formschlussmittel von einem am Messring (25) oder am Düsenkern (14) angeordneten Vorsprung (39, 36) gebildet sind, der in eine am Düsenkern (14) oder am Messring (25) angeordnete Hinterschneidung (13, 25) eingreift.

4. Einspritzdüse nach Anspruch 4, **dadurch gekennzeichnet, dass** der Vorsprung als Steg (39, 36) und die Hinterschneidung als Nut (37, 38) ausgebildet ist.

5. Einspritzdüse nach einem der vorangehenden Ansprüche, **dadurch gekennzeichnet, dass** die Fixiereinrichtung (F) als Rastvorrichtung ausgebildet ist.

6. Einspritzdüse nach einem der vorangehenden Ansprüche, **dadurch gekennzeichnet, dass** der Messring (25) mit mindestens einem Schlitz (35) versehen ist.

7. Einspritzdüse nach einem der vorangehenden Ansprüche, **dadurch gekennzeichnet, dass** der Messring (25) von einem hochwärmeleitfähigen Material, insbesondere von einer Kupfer-Beryllium-Legierung gebildet ist.

8. Einspritzdüse nach einem der vorangehenden Ansprüche, **dadurch gekennzeichnet, dass** in axialer Richtung der Düse (10) zwischen Messring (25) und Düsenspitze (14) ein Luftspalt (32) ausgebildet ist.

9. Einspritzdüse nach Anspruch 9, **dadurch gekennzeichnet, dass** die Weite des Luftspalts (32) mindestens 0,5 mm beträgt.

10. Einspritzdüse nach einem der vorangehenden Ansprüche, **dadurch gekennzeichnet, dass** eine Innenfläche (41) des Messrings (25) und eine mit der Innenfläche (41) des Messrings (25) korrespondierende Außenfläche (42) des Düsenkerns (13) zumindest teilweise konisch ausgebildet sind.
